Europäisches Patentamt

(19) European Patent Office

Office européen des brevets

(11) Veröffentlichungsnummer: **0 075 087**
B1

(12) # EUROPÄISCHE PATENTSCHRIFT

(45) Veröffentlichungstag der Patentschrift:
10.07.85

(51) Int. Cl.⁴: **A 01 B 15/14**, A 01 B 59/048

(21) Anmeldenummer: **82106453.2**

(22) Anmeldetag: **17.07.82**

(54) **Frontpflug.**

(30) Priorität: **17.09.81 DE 3136868**

(43) Veröffentlichungstag der Anmeldung:
**30.03.83 Patentblatt 83/13**

(45) Bekanntmachung des Hinweises auf die Patenterteilung:
**10.07.85 Patentblatt 85/28**

(84) Benannte Vertragsstaaten:
**AT FR GB IT NL**

(56) Entgegenhaltungen:
**DE - A - 2 738 816**
**DE - A - 2 926 060**
**DE - U - 8 032 587**
**GB - A - 2 056 234**

(73) Patentinhaber: **Rabewerk Heinrich Clausing, D-4515 Bad Essen 1 (DE)**

(72) Erfinder: **Albers, Heinrich, Huntestrasse 22, D-4515 Bad Essen 1 (DE)**

(74) Vertreter: **Missling, Arne, Dipl.-Ing. et al, Patentanwälte Dipl.-Ing. R. Schlee Dipl.-Ing. A. Missling Bismarckstrasse 43, D-6300 Giessen (DE)**

**Beschreibung**

Die Erfindung betrifft einen Frontpflug mit einer Pflugkoppel und einem an dieser über eine Schwenkachse angeschlossenen Pflugrahmen, der seitlich gegenüber der Pflugkoppel versetzt angeordnet ist und mit einem Hydraulikzylinder zum Verschwenken des Pflugrahmens relativ zur Koppel.

Ein Pflug der vorstehend genannten Art ist z. B. aus der DE-A-3 019 348 bekanntgeworden. Bei diesem Pflug ist die Schwenkachse, über die der Pflugrahmen schwenkbar an der Pflugkoppel angeschlossen ist, seitlich versetzt zu deren Mitte angeordnet. Am Pflugrahmen greift eine Kette und ein Hydraulikzylinder an. Die Kette hat die Aufgabe, den maximalen Schwenkwinkel zu begrenzen, während der Hydraulikzylinder lediglich dazu dient, den Pflugrahmen vor jedem Wenden der Pflugkörper in eine Stellung zu verschwenken, in der die Pflugkörper ohne Bodenberührung gewendet werden können. Zur Einstellung der Schnittbreite des ersten Pflugkörpers benötigt dieser bekannte Pflug eine Kulisse sowie eine Verstelleinrichtung an der Kette. Diese Konstruktion ist aufwendig und teuer und umständlich in ihrer Einstellung.

Der Erfindung liegt die Aufgabe zugrunde, einen starr angebauten Frontpflug vorzuschlagen, der wesentlich einfacher in seinem Aufbau und kostengünstiger in der Herstellung ist und eine einfache Verstellung der Schnittbreite des ersten Pflugkörpers zuläßt.

Diese Aufgabe wird erfindungsgemäß dadurch gelöst, daß der Pflugrahmen über einen an ihm angelenkten Lenker an der Pflugkoppel angeschlossen ist, daß der Lenker über ein Spannschloß oder einen Hydraulikzylinder mit dem Pflugrahmen im Antrieb drehfest verbunden ist, und daß der Hydraulikzylinder für das Verschieben des Pflugrahmens eine einstellbare feste Einschub- und Auszuglänge hat. Vorteilhaft ist die Schwenkachse für den Lenker und damit für den Pflugrahmen mittig an der Pflugkoppel angeordnet.

Bei einem erfindungsgemäß ausgebildeten Pflug wird somit keine Kulissenführung benötigt, mit der der Pflugrahmen seitlich zur Pflugkoppel verschoben wird. Für die Einstellung der Arbeitsstellung des Pflugrahmens wird lediglich die Auszugslänge des Hydraulikzylinders festgelegt, was z. B. durch verstellbare Anschläge erreicht werden kann. Falls die Verkantung der Pflugkörper verändert werden soll, so geschieht dies durch Verstellen des Spannschlosses, das zwischen dem Pflugrahmen und dem den Pflugrahmen tragenden Lenker angeordnet ist.

Ein erfindungsgemäß ausgebildeter Frontpflug benötigt prinzipiell kein vorderes Stützrad. Jedoch kann es aus Stabilitätsgründen zweckmäßig sein, ein vorderes Stützrad vorzusehen, das entweder in der Vorfurche oder aber auch auf dem ungepflügten Land laufen kann. Letztere Anordnung hat sich für die Entlastung der Pflugkoppel als besonders vorteilhaft erwiesen.

Ein erfindungsgemäßer Frontpflug, der starr an einem vorderen Dreipunktgestänge eines Schleppers angebaut ist, das seinerseits starr mit dem Schlepper verbunden ist, hat vorteilhaft keine tragenden Anlagen an den Pflugkörpern, was sich im Hinblick auf die Steuerbarkeit des Schleppers positiv auswirkt.

Ein vorteilhaftes Ausführungsbeispiel der Erfindung ist im folgenden anhand der Zeichnung näher beschrieben, in der

Fig. 1 eine Draufsicht auf einen erfindungsgemäß ausgebildeten Frontpflug und

Fig. 2 einen Hydraulikzylinder für das Verschwenken des Pflugrahmens mit festen Einschub- und Ausschublängen zeigen.

Der dargestellte Frontpflug 1 besteht aus einem Pflugrahmen 2, der über einen Lenker 3 mit der Pflugkoppel 4 verbunden ist. Der Lenker 3 ist über eine Achse 5 mit dem Pflugrahmen 2 verbunden. Diese Achse 5 ist über ein Spannschloß 6 gesperrt, das Pflugrahmen 2 und Lenker 3 verbindet.

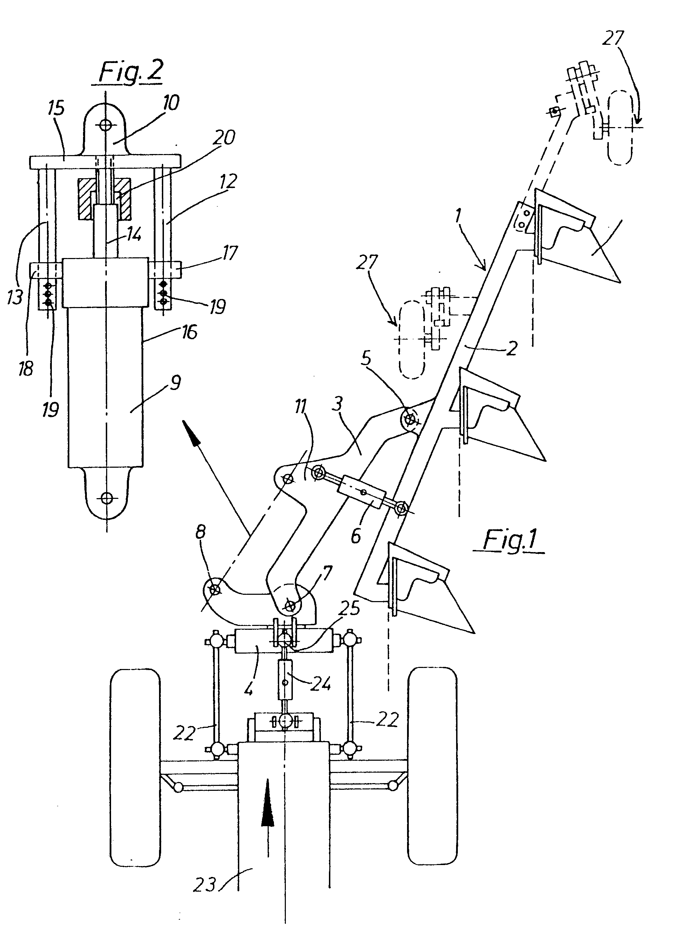

Das andere Ende des Lenkers 3 ist in der mittig an der Pflugkoppel 4 angeordneten Schwenkachse 7 angelenkt. Mit Abstand zur Schwenkachse 7 greift in dem Gelenkpunkt 8 ein Hydraulikzylinder 9 an, der in Fig. 2 dargestellt ist. Das andere Ende 10 des Hydraulikzylinders 9 ist an einem Auge 11 des Lenkers 3 angelenkt.

Der Hydraulikzylinder 9 hat zur Begrenzung seiner Auszugslänge zwei seitlich, parallel zur Zylinderachse angeordnete Stangen 12, 13, die an einer mit der Kolbenstange 14 verbundenen Platte 15 befestigt sind. Die Stangen gleiten in am Zylindergehäuse 16 befestigten Augen 17, 18 und weisen an ihren Enden mehrere Bohrungen 19 auf, in denen Steckerstifte einsteckbar sind. Zur Begrenzung der Einschublänge des Hydraulikzylinders 9 dient eine auf der Kolbenstange 14 aufgeschraubte Mutter 20. Die Einschublänge, die durch die Mutter 20 begrenzt wird, wird einmal eingestellt und markiert die Stellung, in der der Pflugrahmen um 180° gedreht werden kann, ohne daß die Pflugkörper den Boden berühren. Die durch die Stangen bestimmte Auszugslänge dient in erster Linie zur Anpassung des Pflugrahmens an die Reifeninnenseiten des betreffenden Schleppers. Diese Einstellung wird zusammen mit dem Spannschloß 6 durchgeführt. Gleichzeitig wird hierfür auch die Schnittbreite des ersten Pflugkörpers 27 sowie die Verkantung der Pflugkörper eingestellt. Das Spannschloß 6 bestimmt die relative Lage des Pflugrahmens 2 zum Lenker 3 und damit zur Pflugkoppel 4.

Die Pflugkoppel 4 besteht in bekannter Weise aus einer unteren Traverse 21, an der die unteren Lenker 22 eines starr mit dem Schlepper 23 verbundenen Dreipunktgestänges angeschlossen sind. Der obere Lenker 24 ist an einem Turm 25 angelenkt, der an der Traverse 21 befestigt ist.

Der in Fig. 1 dargestellte Frontpflug ist ein Drehpflug. Die Drehachse 26 für das Wenden der Pflugkörper 27 ist in bekannter Weise in der Pflugkoppel 4 angeordnet. Die erforderlichen Mittel für das Wenden der Pflugkörper sind der Übersichtlichkeit halber nicht mit eingezeichnet worden.

Ein erfindungsgemäß ausgebildeter Frontpflug benötigt grundsätzlich kein Stützrad, das den Frontpflug relativ zum Boden oder auch seitlich führt. Der Grund hierfür besteht darin, daß der Frontpflug starr mit dem Schlepper verbunden ist und das Lenken des Pfluges, da die Pflugkörper keine tragenden Anlagen aufweisen, einfach ist. Aus Stabilitätsgründen kann es jedoch vorteilhaft sein, ein vorderes Stützrad 25 vorzusehen, das entweder in der Vorfurche laufen kann oder aber auch auf dem ungepflügten Land. Die letztere Anordnung hat den Vorteil, daß die Pflugkoppel am stärksten hierdurch entlastet wird. Es ist auch denkbar, sowohl ein landseitiges Stützrad als auch ein Vorfurchenrad einzusetzen.

**Patentansprüche**

1. Frcntpflug (1) mit einer Pflugkoppel (4) und einem an dieser über eine Schwenkachse (7) angeschlossenen Pflugrahmen (2), der seitlich gegenüber der Pflugkoppel (4) versetzt angeordnet ist, und mit einem Hydraulikzylinder (9) zum Verschwenken des Pflugrahmens (2) relativ zur Koppel (4), dadurch gekennzeichnet, daß der Pflugrahmen (2) über einen an ihm angelenkten Lenker (3) an der Pflugkoppel (4) angeschlossen ist, daß der Lenker (3) über ein Spannschloß oder einen Hydraulikzylinder (6) mit dem Pflugrahmen (2) im Betrieb drehfest verbunden ist, und daß der Hydraulikzylinder (9) für das Verschwenken des Pflugrahmens (2) eine einstellbare, feste Einschub- und Auszugslänge hat.

2. Frontpflug nach Anspruch 1, dadurch gekennzeichnet, daß die Schwenkachse (7) für den Lenker (3) und damit den Pflugrahmen (2) mittig an der Pflugkoppel (4) angeordnet ist.

3. Frontpflug nach Anspruch 1 oder 2, dadurch gekennzeichnet, daß die Pflugkörper (27) keine tragende Anlage aufweisen.

4. Frontpflug nach einem der Ansprüche 1 bis 3, dadurch gekennzeichnet, daß der Frontpflug (1) mit einem vorderen landseitig angeordneten Stützrad versehen ist.

5. Frontpflug nach Anspruch 4, dadurch gekennzeichnet, daß der Frontpflug mit einem vorderen Furchenstützrad versehen ist.

**Claims**

1. A front plough (1) comprising a plough coupling (4) and a plough frame (2), which is connected to the latter by way of a pivot axis (7) and which is arranged laterally offset with respect to the plough coupling (4), and comprising an hydraulic cylinder (9) for pivoting the plough frame (2) relative to the coupling (4) (sic), characterized in that the plough frame (2) is connected to the plough coupling (4) by way of a guide bar (3) articulated thereon, the guide bar (3) is connected rotationally rigidly in operation to the plough frame (2) by way of a screw shackle or an hydraulic cylinder (6), and the hydraulic cylinder (9) has an adjustable, fixed insertion and extraction length for pivoting the plough frame (2).

2. A front plough according to claim 1, characterized in that the pivot axis (7) for the guide bar (3) and thus for the plough frame (2) is disposed in the centre of the plough coupling (4).

3. A front plough according to claim 1 or 2, characterized in that the plough bases (27) have no bearing support.

4. A front plough according to any one of claims 1 to 3, characterized in that the front plough (1) is provided with a forward support wheel arranged facing the ground.

5. A front plough according to claim 4, characterized in that the front plough is provided with a forward furrow support wheel.

**Revendications**

1. Charrue frontale (1) comportant une pièce d'accouplement de charrue (4) et un cadre de charrue (2) qui lui est rattaché par l'intermédiaire d'un axe de pivotement (7), ce cadre (2) étant disposé avec décalage latéral par rapport à la pièce d'accouplement de charrue (4), et comportant un vérin hydraulique (9) pour opérer le retournement du cadre de charrue (2) par rapport à la pièce d'accouplement (4), caractérisée en ce que le cadre de charrue (2) est rattaché à la pièce d'accouplement de charrue (4) par l'intermédiaire d'une bielle (3) qui lui est articulée; en ce que la bielle (3) est reliée, sans pouvoir tourner pendant le fonctionnement, au cadre de charrue par l'intermédiaire d'un tendeur ou d'un vérin hydraulique (6); et en ce que le vérin hydraulique (9) comporte, pour déplacer le cadre de charrue (2), une longueur fixe réglable de rentrée et d'extension.

2. Charrue frontale selon la revendication 1, caractérisée en ce que l'axe de pivotement (7) de la bielle et par suite le cadre de charrue (2) sont disposés au milieu sur la pièce d'accouplement de charrue (4).

3. Charrue frontale selon la revendication 1 ou 2, caractérisée en ce que les corps de charrue (27) ne comportant pas de pièces supports de contact.

4. Charrue frontale selon l'une des revendications 1 à 3, caractérisée en ce que la charrue frontale (1) est pourvue d'une roue avant d'appui disposée du côté du terrain.

5. Charrue frontale selon la revendication 4, caractérisée en ce que ladite charrue est pourvue d'une roue avant d'appui de raie.

Fig.2

Fig.1